(19) Europäisches Patentamt
European Patent Office
Office européen des brevets

(11) **EP 4 663 478 A1**

(12) **EUROPEAN PATENT APPLICATION**
published in accordance with Art. 153(4) EPC

(43) Date of publication:
**17.12.2025 Bulletin 2025/51**

(21) Application number: **24753386.2**

(22) Date of filing: **07.02.2024**

(51) International Patent Classification (IPC):
**B60Q 1/076** (2006.01)   **B60Q 1/04** (2006.01)
**B60Q 1/14** (2006.01)   **B60Q 1/16** (2006.01)
**F21S 41/143** (2018.01)   **F21S 41/153** (2018.01)
**F21S 41/663** (2018.01)   **F21W 102/145** (2018.01)
**F21W 102/155** (2018.01)   **F21Y 105/10** (2016.01)
**F21Y 105/14** (2016.01)   **F21Y 115/10** (2016.01)

(52) Cooperative Patent Classification (CPC):
**B60Q 1/04; B60Q 1/076; B60Q 1/14; B60Q 1/16;
F21S 41/143; F21S 41/153; F21S 41/663;**
F21W 2102/145; F21W 2102/155; F21Y 2105/10;
F21Y 2105/14; F21Y 2115/10

(86) International application number:
**PCT/JP2024/004107**

(87) International publication number:
**WO 2024/166943 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.02.2023 JP 2023018451
15.02.2023 JP 2023021879**

(71) Applicant: **Koito Manufacturing Co., Ltd.
Tokyo 141-0001 (JP)**

(72) Inventors:
• **ITO, Tatsuki
Shizuoka-shi, Shizuoka 424-8764 (JP)**
• **KURODA, Shingo
Shizuoka-shi, Shizuoka 424-8764 (JP)**

(74) Representative: **Hoffmann Eitle
Patent- und Rechtsanwälte PartmbB
Arabellastraße 30
81925 München (DE)**

(54) **VEHICLE HEADLIGHT**

(57)      A vehicle headlight (10) capable of emitting an ADB light distribution pattern (PH) and a low beam light distribution pattern (PL), wherein a first brightness gradient (G1) in the up-down direction on a first cutoff line (CL1) that is formed when the low beam light distribution pattern (PL) is emitted and that extends in the left-right direction is different from a second brightness gradient (G2) in the left-right direction on a second cutoff line (CL2) that is formed when the ADB light distribution pattern (PH) is emitted and that extends in the up-down direction between an illuminated area and a non-illuminated area.

FIG. 2

EP 4 663 478 A1

**Description**

TECHNICAL FIELD

The present disclosure relates to a vehicle headlamp.

BACKGROUND ART

Patent Literature 1 discloses a vehicle headlamp that uses an array multi-LED light source to switch between high beam and low beam emission. In such a vehicle headlamp, since an irradiation region is irradiated with light uniformly, a cutoff line has a uniform brightness gradient.
Patent Literature 2 discloses a vehicle lamp capable of improving visibility of a driver by blurring a cutoff line.

CITATION LIST

PATENT LITERATURE

Patent Literature 1: WO2018/186187A1
Patent Literature 2: JP2008-262755A

SUMMARY OF INVENTION

TECHNICAL PROBLEM

An adaptive driving beam (ADB) light distribution pattern is known. The ADB light distribution pattern is a light distribution pattern in which a region where a preceding vehicle or an oncoming vehicle is present is not irradiated with light in a high beam light distribution pattern, and is a light distribution pattern in which a non-irradiation region is changed depending on the presence or absence and the position of the preceding vehicle or the oncoming vehicle. As in Patent Literature 1, even in a vehicle headlamp using an array multi-LED light source, it is possible to form an ADB light distribution pattern by turning off the LEDs corresponding to a light-blocked region of the high beam region. The ADB light distribution pattern has an effect of not giving glare to an occupant in a preceding vehicle or an oncoming vehicle.
When a preceding vehicle or the like is present in front of a subject vehicle and an ADB light distribution pattern is emitted, if a light distribution pattern with a blurred light-dark boundary as in Patent Literature 1 is formed, there is a possibility that glare may be caused to an occupant of the preceding vehicle or the like. On the other hand, when there is no preceding vehicle or the like and a low beam light distribution pattern is emitted, if a light distribution pattern with a sharp light-dark boundary is formed, long-distance visibility is deteriorated, and a sense of discomfort is given to an occupant of the subject vehicle, resulting in deteriorated visibility. As described above, the demand for a degree of boundary blurring varies depending on a light distribution pattern to be emitted.
Further, it is also preferable to form a low beam light distribution pattern with a sharp cutoff line where the light and dark suddenly change, thereby reducing glare to a driver of a preceding vehicle or an oncoming vehicle. However, this makes it difficult to meet the demand for forming a low beam light distribution pattern having good visibility by blurring the cutoff line as in Patent Literature 2.
An object of the present disclosure is to provide a vehicle headlamp that varies a degree of blurring of a cutoff line depending on a light distribution pattern to be emitted.
Another object of the present disclosure is to provide a vehicle headlamp that can form a light distribution pattern with good visibility while reducing the occurrence of glare.

SOLUTION TO PROBLEM

A vehicle headlamp according to an aspect of the present disclosure is

a vehicle headlamp for emitting an ADB light distribution pattern and a low beam light distribution pattern,
in which a first brightness gradient in an upper-lower direction on a first cutoff line extending in a left-right direction is different from a second brightness gradient in the left-right direction on a second cutoff line extending in the upper-lower direction between an irradiation region and a non-irradiation region, the first cutoff line being formed in a case where the low beam light distribution pattern is emitted, the second cutoff line being formed in a case where the ADB light distribution pattern is emitted.

According to the above configuration, the first brightness gradient in the upper-lower direction on the first cutoff line, which is formed when the low beam light distribution pattern is emitted and which extends in the left-right direction, is different from the second brightness gradient in the left-right direction on the second cutoff line, which is formed when the ADB light distribution pattern is emitted and which extends in the upper-lower direction between the irradiation region and the non-irradiation region. Therefore, the brightness gradients of the cutoff lines can be varied depending on the light distribution pattern to be emitted.

A vehicle headlamp according to another aspect of the present disclosure includes:

a light source unit having a plurality of light sources each configured to change a light emission state independently, in which the light source unit is configured to lower a first emission brightness of a light source corresponding to a light-reduced region to be lower than a second emission brightness of a light source corresponding to an irradiation region to form an ADB light distribution pattern and a low beam light distribution pattern, and
the light source unit is configured to cause a light source corresponding to a cutoff line of the low beam light distribution pattern to emit light at brightness intermediate between the first emission brightness and the second emission brightness.

According to the above configuration, the light source corresponding to the cutoff line of the low beam light distribution pattern emits light at brightness intermediate between the first emission brightness and the second emission brightness. Therefore, it is possible to form a low beam light distribution pattern having a relatively blurred cutoff line and excellent visibility.

A vehicle headlamp according to still another aspect of the present disclosure is

a vehicle headlamp for forming a low beam light distribution pattern having a cutoff line,
in which a first brightness gradient in a first portion located at a center of the cutoff line is larger than a second brightness gradient in a second portion located outside the first portion of the cutoff line, a brightness gradient being a ratio of illuminance at a predetermined position of the cutoff line of the low beam light distribution pattern to illuminance at a position above the predetermined position by a vertical angle position of 0.1 degrees, the low beam light distribution pattern being formed on a virtual vertical screen disposed at a predetermined distance from a vehicle, the first portion of the cutoff line extends in a left-right direction across a line V-V on the virtual vertical screen, and a length of the first portion on one side of the left-right direction with respect to the line V-V is longer than a length of the first portion on an other side of the left-right direction with respect to the line V-V.

According to this arrangement, the first portion, which is the central portion of the cutoff line of the low beam light distribution pattern, forms a sharp cutoff line, so that glare on a preceding vehicle or an oncoming vehicle can be reduced. On the other hand, the second portion, which is the outer portion of the cutoff line, forms a blurred cutoff line, making it possible to improve the visibility. Therefore, it is possible to provide a vehicle headlamp that can form a light distribution pattern with good visibility while reducing the occurrence of glare.

ADVANTAGEOUS EFFECTS OF INVENTION

According to the present disclosure, it is possible to provide a vehicle headlamp that varies a degree of blurring of a cutoff line depending on a light distribution pattern to be emitted.

According to the present disclosure, it is possible to provide a vehicle headlamp that can form a light distribution pattern with good visibility while reducing the occurrence of glare.

BRIEF DESCRIPTION OF DRAWINGS

[FIG. 1] FIG. 1 is a perspective view of a vehicle equipped with a vehicle headlamp according to a first embodiment of the present disclosure.
[FIG. 2] FIG. 2 is a block diagram of a system configuration including the vehicle headlamp according to the first embodiment.
[FIG. 3] FIG. 3 is a cross-sectional view of the vehicle headlamp according to the first embodiment.
[FIG. 4] FIG. 4 is a diagram illustrating a low beam light distribution pattern during low beam emission in the first embodiment.

[FIG. 5] FIG. 5 is a diagram illustrating a high beam light distribution pattern during high beam emission in the first embodiment.

[FIG. 6] FIG. 6 is a diagram illustrating a state in which a cutoff line is blurred in the first embodiment.

[FIG. 7] FIG. 7 is a block diagram of a system configuration including a vehicle headlamp according to a second embodiment.

[FIG. 8] FIG. 8 is a cross-sectional view of the vehicle headlamp according to the second embodiment.

[FIG. 9] FIG. 9 is a diagram illustrating a low beam light distribution pattern during low beam emission in the second embodiment.

[FIG. 10] FIG. 10 is a diagram illustrating a high beam light distribution pattern during high beam emission in the second embodiment.

DESCRIPTION OF EMBODIMENTS

Hereinafter, the present embodiment will be described with reference to the drawings. Dimensions of members illustrated in the drawings may be different from actual dimensions of the members for convenience of description.

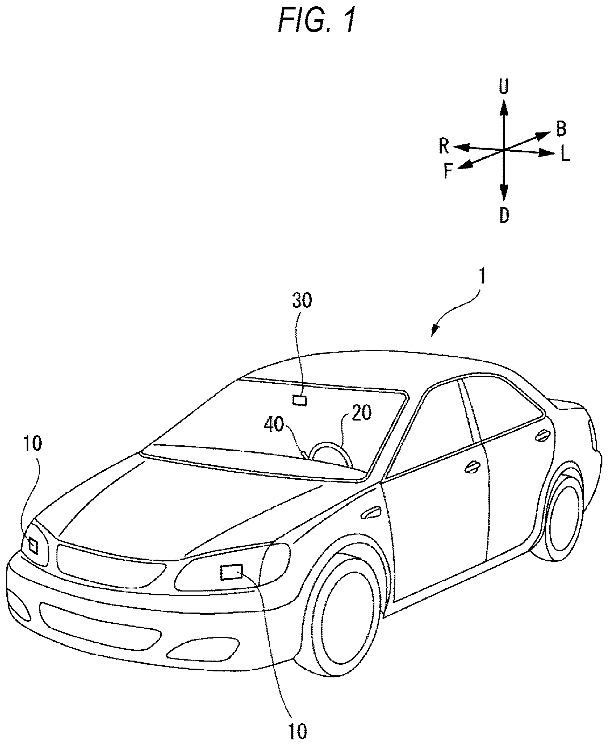

In the description of the present embodiment, a "left-right direction", an "upper-lower direction", and a "front-rear direction" may be appropriately referred to for convenience of description. The directions are relative directions set for a vehicle 1 illustrated in FIG. 1. Here, the "left-right direction" is a direction including a "left direction" and a "right direction", and is also a vehicle width direction of the vehicle 1. The "upper-lower direction" is a direction including an "upper direction" and a "lower direction". The "front-rear direction" is a direction including a "front direction" and a "rear direction". The front-rear direction is a direction orthogonal to the left-right direction and the upper-lower direction. In the drawings, a reference numeral U indicates the upper direction. A reference numeral D indicates the lower direction. A reference numeral F indicates the front direction. A reference numeral B indicates the rear direction. A reference numeral L indicates the left direction. A reference numeral R indicates the right direction.

(First Embodiment)

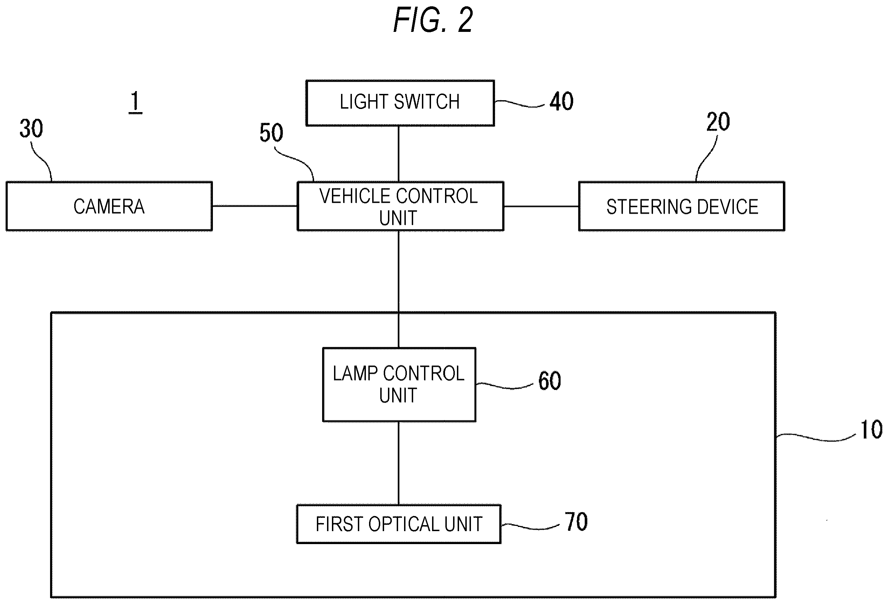

First, a vehicle headlamp 10 according to the first embodiment will be described below with reference to FIGS. 1 to 3. FIG. 1 is a perspective view of a vehicle 1 on which the vehicle headlamp 10 is mounted. FIG. 2 is a block diagram of a system configuration including the vehicle headlamp 10. The vehicle 1 is, for example, a vehicle (an autonomous vehicle) that can travel in a manual driving mode and/or an autonomous driving mode.

As illustrated in FIGS. 1 and 2, the vehicle 1 includes the vehicle headlamps 10, a steering device 20, a camera 30, a light switch 40, and a vehicle control unit 50. As illustrated in FIG. 1, the vehicle headlamps 10 are disposed on a front right side and a front left side of the vehicle 1, respectively. The steering device 20 is provided, for example, inside the vehicle 1. The camera 30 is disposed, for example, near a windshield. The camera 30 is disposed between the vehicle headlamp 10 disposed on the front right side of the vehicle 1 and the vehicle headlamp 10 disposed on the front left side of the vehicle 1 in the vehicle width direction of the vehicle 1 (left-right direction in FIG. 1). The light switch 40 is provided, for example, in the vicinity of the steering device 20.

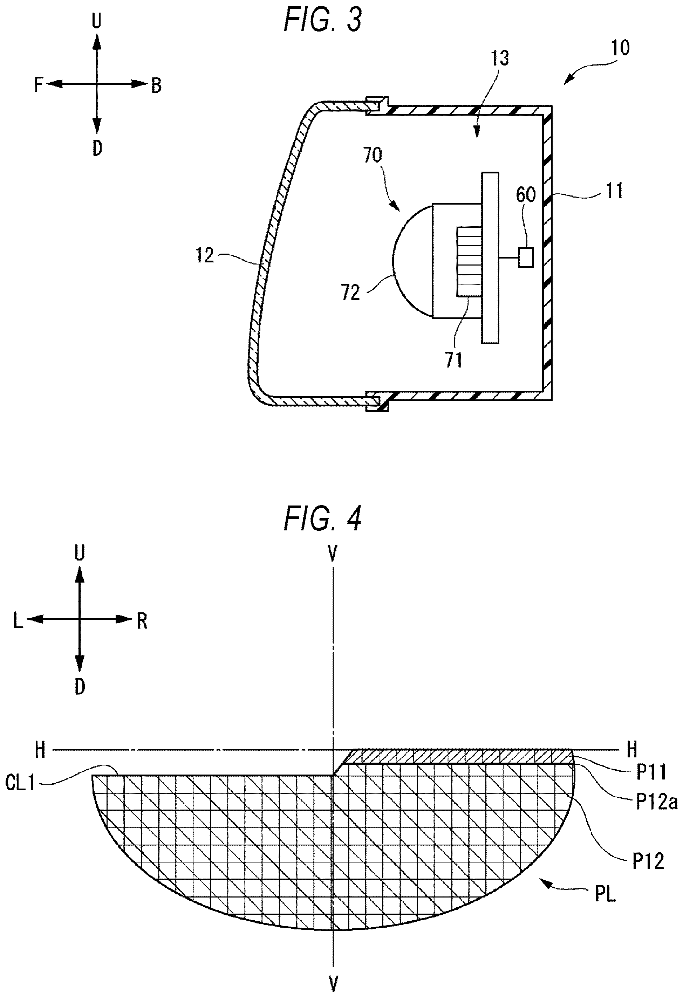

As illustrated in FIG. 2, the vehicle headlamp 10 includes a lamp control unit 60 and a first optical unit 70. As illustrated in FIG. 3, the vehicle headlamp 10 includes a lamp body 11 having an opening in front of the vehicle headlamp 10, and a light-transmitting outer cover 12 that covers the opening of the lamp body 11. The lamp control unit 60 and the first optical unit 70 are accommodated in a lamp chamber 13 formed by the lamp body 11 and the outer cover 12.

Returning to FIG. 2, the steering device 20 will be described. The steering device 20 includes, for example, a steering wheel.

The camera 30 is, for example, a camera including an imaging element such as a charge-coupled device (CCD) or a complementary MOS (CMOS). The camera 30 acquires imaging data by capturing images of the surroundings of the vehicle 1 (for example, an area in front of the vehicle 1). The camera 30 outputs the imaging data to the vehicle control unit 50.

The light switch 40 is configured to, for example, switch the vehicle headlamp 10 ON and OFF, and switch a light distribution pattern to be emitted according to an operation by a driver of the vehicle 1. The driver of the vehicle 1 can select whether to turn on low beam or high beam by operating the light switch 40. When the driver of the vehicle 1 operates the light switch 40, the light switch 40 generates a control signal for emitting a light distribution pattern corresponding to the operation, and transmits the signal to the vehicle control unit 50.

The vehicle control unit 50 is configured to control traveling of the vehicle 1. The vehicle control unit 50 is configured to determine the surrounding environment of the vehicle 1 based on surrounding environment information, and transmit a determination result to the lamp control unit 60. The vehicle control unit 50 is implemented by, for example, at least one electronic control unit (ECU). The electronic control unit includes, for example, a computer system including one or more processors and one or more memories, and an electronic circuit including an active element such as a transistor and a passive element.

The vehicle control unit 50 is configured to perform image analysis on the captured imaging data output from the camera 30. The vehicle control unit 50 is configured to detect the surrounding environment information indicating the surrounding environment of the vehicle 1 from the imaging data, and transmits the surrounding environment information to the lamp control unit 60. The surrounding environment information includes, for example, position information of an object (an oncoming vehicle, a preceding vehicle, a sign, or the like) located in front of the vehicle 1. The position information is, for example, an angular coordinate that represents the angle of the object as viewed from the vehicle 1.

The vehicle control unit 50 is configured to transmit a signal for controlling the vehicle headlamp 10 to the lamp control unit 60, based on the control signal from the light switch 40. For example, in a case where the driver of the vehicle 1 performs an operation on the light switch 40 to emit a low beam light distribution pattern, the vehicle control unit 50 receives from the light switch 40 a control signal for emitting the low beam light distribution pattern and transmits the control signal to the lamp control unit 60. For example, in a case where the driver of the vehicle 1 performs an operation on the light switch 40 to emit a high beam light distribution pattern (for example, an adaptive driving beam (ADB) light distribution pattern), the vehicle control unit 50 receives from the light switch 40 a control signal for emitting the high beam light distribution pattern (for example, the ADB light distribution pattern) and transmits the control signal to the lamp control unit 60. The ADB light distribution pattern is a light distribution pattern in which a region where an object such as a preceding vehicle or an oncoming vehicle is present is not irradiated with light in the high beam light distribution pattern, and is a light distribution pattern in which a non-irradiation region is changed depending on the presence or absence and the position of the object. Note that, the light distribution pattern in which a region where an object such as a preceding vehicle or an oncoming vehicle is present is not irradiated with light in the high beam light distribution pattern includes at least one of a pattern in which no light is emitted onto a target region, and a pattern in which reduced light is emitted onto a target region.

The lamp control unit 60 may have the same hardware configuration as the vehicle control unit 50. The lamp control unit 60 is configured to control the first optical unit 70 based on the surrounding environment information received from the vehicle control unit 50.

The first optical unit 70 is configured to emit an ADB light distribution pattern and a low beam light distribution pattern. Further, the first optical unit 70 is configured to emit light to a region including a cutoff line and at least a region below the cutoff line and reduce light to a given region among the region. As illustrated in FIG. 3, the first optical unit 70 includes, for example, a light source 71 and a projection lens 72.

The light source 71 is implemented by, for example, an LED array including a plurality of micro LED light emitting elements. The LED array is, for example, a light source in which a plurality of micro LED light emitting elements are arranged in an array. The LED array is an example of a light source unit.

The light emission states of the plurality of micro LED light emitting elements included in the light source 71 can be changed independently of each other. In the vehicle headlamp 10, the lamp control unit 60 is configured to perform ON/OFF control and brightness adjustment for each of the micro LED light emitting elements included in the light source 71. That is, the first optical unit 70 is configured to reduce the light of any region. In the present specification, the term "reduce light" includes blocking at least a part of the light emitted from the first optical unit 70 and reducing the intensity of the light emitted from the first optical unit 70. In other words, the light source 71 (LED array) is configured to form the ADB light distribution pattern and the low beam light distribution pattern by lowering the brightness of the micro LED light emitting element corresponding to a light-reduced region (first emission brightness) to be lower than the brightness of the micro LED light emitting element corresponding to an irradiation region (second emission brightness). The light source 71 emits light toward the projection lens 72.

The projection lens 72 is, for example, an aspherical lens in which a front surface is a convex surface and a rear surface is a flat surface. The projection lens 72 is formed of a transparent material such as a transparent resin such as acrylic. The projection lens 72 is configured to project the light emitted from the light source 71 onto a front region of the vehicle 1.

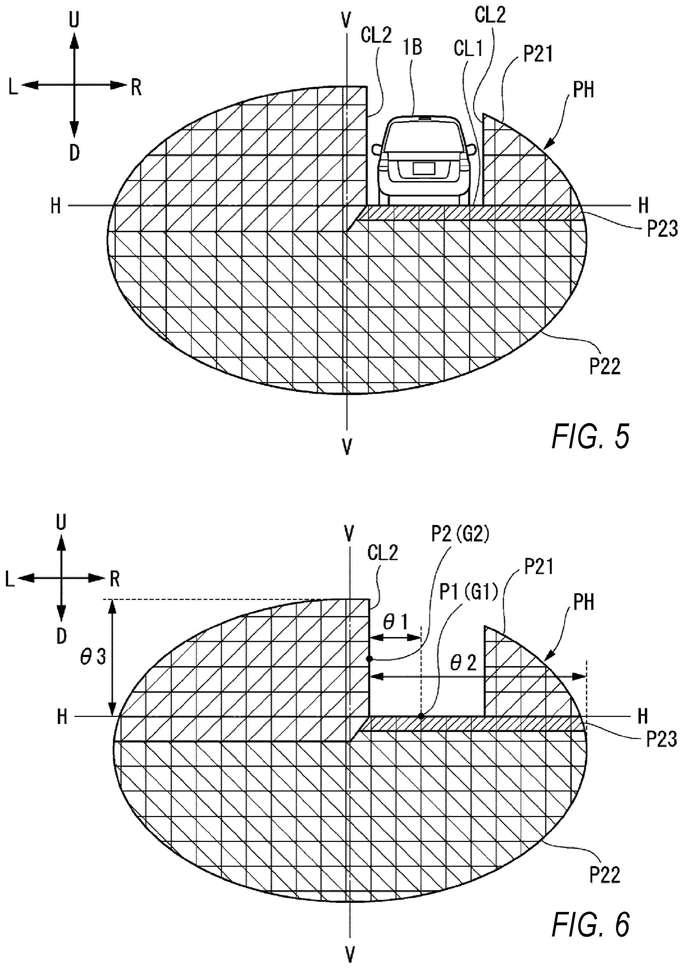

Next, with reference to FIGS. 4 and 5, a low beam light distribution pattern PL emitted from the vehicle headlamp 10 during low beam emission and a high beam light distribution pattern PH emitted from the vehicle headlamp 10 during high beam emission will be described. In the first embodiment, a case where the vehicle 1 is traveling in the right lane will be described. The low beam emission refers to a time when the driver of the vehicle 1 performs an operation on the light switch 40 to emit the low beam light distribution pattern PL. The high beam emission refers to a time when the driver of the vehicle 1 performs an operation on the light switch 40 to emit the high beam light distribution pattern PH. The high beam light distribution pattern PH emitted in the first embodiment is an ADB light distribution pattern. In FIGS. 4 and 5, hatching is changed for each region having different brightness. That is, the brightness of the regions with the same hatching is the same, but the brightness of the regions with different hatching is different.

FIG. 4 is a diagram illustrating the low beam light distribution pattern PL projected on a virtual vertical screen at a predetermined position in front of the vehicle 1 (for example, a position 25 m in front of the vehicle 1) during the low beam emission. FIG. 5 is a diagram illustrating the high beam light distribution pattern PH projected on a virtual vertical screen at a predetermined position in front of the vehicle 1 (for example, a position 25 m in front of the vehicle 1) during the high beam emission. The predetermined position is an example of a position at a predetermined distance.

First, the low beam light distribution pattern PL during the low beam emission in the first embodiment will be described with reference to FIG. 4. When the driver of the vehicle 1 operates the light switch 40 to emit the low beam light distribution pattern PL, the first optical unit 70 emits the low beam light distribution pattern PL. In this case, the low beam light distribution pattern PL illustrated in FIG. 4 is projected onto a virtual vertical screen at a predetermined position in front of the vehicle 1.

As illustrated in FIG. 4, in a case where the low beam light distribution pattern PL is emitted, a first cutoff line CL1 is formed. The first cutoff line CL1 is a light-dark boundary extending in the left-right direction. A region above the first cutoff line CL1 is dark, and a region below the first cutoff line CL1 is bright.

As illustrated in FIG. 4, the low beam light distribution pattern PL is divided into a plurality of irradiation regions. In FIG. 4, a first portion P11 is indicated by hatching with diagonal lines slanting upward to the right, and a second portion P12 is indicated by hatching with diagonal lines slanting downward to the right.

The first portion P11 is a region of the low beam light distribution pattern PL that is located above an elbow point of the first cutoff line CL1, among the plurality of divided irradiation regions. In the illustrated example, among the regions of the low beam light distribution pattern PL located above the elbow point of the first cutoff line CL1, an uppermost region is defined as the first portion P11.

The second portion P12 is the portion below the first portion P11. The brightness of an upper edge region P12a of the second portion P12 is higher than the brightness of the first portion P11. In the first embodiment, the second portion P12 has the same brightness throughout.

The first portion P11 is darker than the upper edge region P12a of the second portion P12. Therefore, when attention is paid to the vicinity of the first cutoff line CL1 of the low beam light distribution pattern PL, the upper edge region P12a of the bright second portion P12, the first portion P11 darker than the region P12a, and a region where no light is emitted are arranged from bottom to top, and the brightness changes in three stages and gradually becomes dark. In other words, the brightness in the upper-lower direction across the first cutoff line CL1 changes in three stages from bright to dark from bottom to top.

Next, the high beam light distribution pattern PH during the high beam emission in the first embodiment will be described with reference to FIG. 5. In a case where the driver of the vehicle 1 operates the light switch 40 to emit the high beam light distribution pattern PH, the first optical unit 70 emits the high beam light distribution pattern PH. In this case, the high beam light distribution pattern PH illustrated in FIG. 5 is projected onto a virtual vertical screen at a predetermined position in front of the vehicle 1.

The high beam light distribution pattern PH is divided into a plurality of irradiation regions. As described above, during both the low beam emission and the high beam emission, the irradiation region of the first optical unit 70 is divided into a plurality of regions, any of which can change an illumination state independently of one another. That is, the first optical unit 70 is configured to irradiate with light an irradiation region including a plurality of regions, any of which can change an illumination state independently of one another.

In the first embodiment, the high beam light distribution pattern PH is divided into a first portion P21 above the first cutoff line CL1 and a second portion P22 below the first cutoff line CL1. Further, the high beam light distribution pattern PH also has a third portion P23 located between the first portion P21 and the second portion P22 and above the elbow point of the first cutoff line CL1. In FIG. 5, the first portion P21 is shown as a region hatched with diagonal lines slanting upward to the right, and the second portion P22 is shown as a region hatched with diagonal lines slanting downward to the right. Further, in FIG. 5, the third portion P23 is shown as a region hatched with diagonal lines slanting upward to the right, which is different from the first portion P21. In the first portion P21, the region where light is blocked or reduced changes according to the presence or absence and the position of a preceding vehicle or an oncoming vehicle. On the other hand, in the second portion P22 and the third portion P23, the illumination state does not change even if the presence or absence and the position of a preceding vehicle or an oncoming vehicle change. Both the first portion P21 and the second portion P22 are illuminated with uniform brightness. The brightness of the second portion P22 is equal to the brightness of the second portion P12 of the low beam light distribution pattern PL described with reference to FIG. 4. The third portion P23 is illuminated with brightness different from those of the first portion P21 and the second portion P22.

In the example illustrated in FIG. 5, since a preceding vehicle 1B is present in front of the vehicle 1, the camera 30 is configured to output imaging data regarding the preceding vehicle 1B to the vehicle control unit 50. The vehicle control unit 50 is configured to detect the surrounding environment information including the position information of the preceding vehicle 1B from the imaging data received from the camera 30, and transmit the surrounding environment information to the lamp control unit 60. The lamp control unit 60 is configured to control the first optical unit 70 to form the first portion P21, based on the surrounding environment information received from the vehicle control unit 50, so that light is not emitted toward the preceding vehicle 1B. The lamp control unit 60 is configured to form the second portion P22 and the third portion P23 regardless of the surrounding environment information. Therefore, in the example shown in FIG. 5, the high beam light distribution pattern PH in which light to the surrounding region of the preceding vehicle 1B is blocked is formed.

As illustrated in FIG. 5, in a case where the high beam light distribution pattern (ADB light distribution pattern) PH is emitted, a second cutoff line CL2 is formed. The second cutoff line CL2 is a light-dark boundary that extends in the upper-lower direction between the irradiation region and the non-irradiation region that is a surrounding region of the preceding vehicle 1B.

As illustrated in FIG. 5, in a case where the high beam light distribution pattern (ADB light distribution pattern) PH is emitted, a part of the first cutoff line CL1 appears as the contour of a lower edge of the light-blocked region, and the second cutoff line CL2 appears as the contours of a left edge and a right edge of the light-blocked region. The first cutoff line CL1 is formed by an upper edge of the third portion P23. The second cutoff line CL2 is formed by edges of the first portion P21 adjacent to the non-irradiation region. The first portion P21 is irradiated with uniform brightness, and the brightness in the left-right direction across the second cutoff line CL2 changes in two stages from bright to dark from the irradiation region toward the non-irradiation region. That is, the first cutoff line CL1 of the low beam light distribution pattern PL illustrated in FIGS. 4 and 5 becomes darker in three stages from bottom to top, while the second cutoff line CL2 of the high beam light distribution pattern (ADB light distribution pattern) PH illustrated in FIG. 5 becomes darker in two stages from the irradiation region toward the non-irradiation region.

As described above, in the vehicle headlamp 10 according to the first embodiment, a degree of blurring in the upper-lower direction of the first cutoff line CL1 formed when the low beam light distribution pattern PL is emitted is different from a degree of blurring in the left-right direction of the second cutoff line CL2 formed when the high beam light distribution pattern (ADB light distribution pattern) PH is emitted. In other words, a first brightness gradient in the upper-lower direction of the first cutoff line CL1 formed in a case where the low beam light distribution pattern PL is emitted is different from a second brightness gradient in the left-right direction of the second cutoff line CL2 formed in a case where the high beam light distribution pattern (ADB light distribution pattern) PH is emitted. More specifically, the second brightness gradient is greater than the first brightness gradient.

The degree of blurring of the first cutoff line CL1 and the second cutoff line CL2 can be expressed by a brightness gradient. Therefore, in the first embodiment, the degree of blurring of each cutoff line will be described in detail with reference to FIG. 6 showing light distribution patterns having cutoff lines with different degrees of blurring. FIG. 6 is a diagram illustrating a first brightness gradient G1 on the first cutoff line CL1 of the low beam light distribution pattern PL and a second brightness gradient G2 on the second cutoff line CL2 of the high beam light distribution pattern (ADB light distribution pattern) PH. FIG. 6 shows the high beam light distribution pattern (ADB light distribution pattern) PH shown in FIG. 5. In FIG. 6, the first portion P21, the second portion P22, and the third portion P23 are hatched differently to distinguish them from each other. The brightness of the first portion P21 and the brightness of the second portion P22 are the same. The brightness of the third portion P23 is different from the brightness of the first portion P21 and the brightness of the second portion P22.

A position P1 in FIG. 6 is a reference position for measuring the first brightness gradient. The position P1 is any position that is on a line H-H, and is within a range from an angle θ1 to the right to an angle θ2 to the left from a front face (line V-V) of the vehicle headlamp in the horizontal direction. The first brightness gradient G1 at the position P1 is calculated using the following equation (1). E(a) represents illuminance at the position P1. E(a + 0.1) represents illuminance at a position above the position P1 by a vertical angular position of 0.1 degrees.

$$G1 = \log E(a) - \log E(a + 0.1) \quad \text{Equation (1)}$$

In FIG. 6, the position P1 is included in the third portion P23. The third portion P23 is darker than the second portion P22. A region above the third portion P23 by 0.1 degrees is a region not irradiated with light, and thus the region is darker than the second portion P22 and the third portion P23. In other words, the region above the third portion P23 is the darkest, the third portion P23 is brighter than the region above the third portion P23 but darker than the second portion P22, and the second portion P22 is the brightest.

A position P2 in FIG. 6 is a reference position for measuring the second brightness gradient. The position P2 is any position in a range above a front face (line H-H) of the vehicle headlamp in the upper-lower direction, above the line H-H, and below angle θ3. In FIG. 6, the position P2 is located on the second cutoff line CL2 on the left side of the non-irradiation region (the left side of the preceding vehicle 1B). The second brightness gradient G2 at the position P2 is calculated using the following equation (2). E(b) represents illuminance at the position P2. E(b + 0.1) represents illuminance at a position on the right of the position P2 by a horizontal angular position of 0.1 degrees. When the position P2 is located on the second cutoff line CL2 on the right side of the non-irradiation region (the right side of the preceding vehicle 1B), the second brightness gradient G2 can be calculated using the equation (2) by setting E(b + 0.1) as the illuminance at a position on the left of the position P2 by a horizontal angular position of 0.1 degrees.

$$G2 = \log E(b) - \log E(b + 0.1) \quad \text{Equation (2)}$$

As described above, the first brightness gradient G1 indicates a degree of change at the position P1 from the brightness of the third portion P23, which is darker than the second portion P22, to a state in which no light is emitted. On the other hand, the second brightness gradient G2 indicates a degree of change at the position P2 from the brightness of the first portion P21 to a state in which no light is emitted. That is, the first brightness gradient G1 is smaller than the second brightness gradient G2. The smaller the brightness gradient, the smaller the light-dark difference of the cutoff line. Therefore, the light-dark difference in the upper-lower direction of the first cutoff line CL 1 is smaller than the light-dark difference in the left-right direction of the second cutoff line CL2 in the example shown in FIG. 6. Therefore, in the example shown in FIG. 6, the second cutoff line CL2 is sharp, while the right side of the first cutoff line CL1 is blurred.

As described above, whether or not "the first brightness gradient in the upper-lower direction on the first cutoff line, which is formed when the low beam light distribution pattern is emitted and which extends in the left-right direction, is different from the second brightness gradient in the left-right direction on the second cutoff line, which is formed when the ADB light distribution pattern is emitted and which extends in the upper-lower direction between the irradiation region and the non-irradiation region" referred to in the present disclosure can be determined by comparing the brightness gradients at positions near the cutoff line for each of the low beam light distribution pattern and the ADB light distribution pattern, using the above-described equations (1) and (2).

When the ADB light distribution pattern (high beam light distribution pattern) PH is emitted, if a light distribution pattern with a blurred cutoff line (light-dark boundary) is formed, glare may be given to an occupant of the preceding vehicle 1B. On the other hand, when there is no preceding vehicle 1B or the like and the low beam light distribution pattern PL is emitted, if a light distribution pattern with a sharp cutoff line is formed, long-distance visibility is deteriorated, and a sense of discomfort is given to the driver of the vehicle 1 with respect to the sharp boundary between light and dark, resulting in deteriorated visibility. This is because if there is a dark region very close to a bright region, the visibility of the dark region is extremely reduced.

According to the vehicle headlamp 10 having the above configuration, the first brightness gradient G1 in the upper-lower direction on the first cutoff line CL1, which is formed when the low beam light distribution pattern PL is emitted and which extends in the left-right direction, is different from the second brightness gradient G2 in the left-right direction on the second cutoff line CL2, which is formed when the high beam light distribution pattern (ADB light distribution pattern) PH is emitted and which extends in the upper-lower direction between the irradiation region and the non-irradiation region. Therefore, the brightness gradients of the cutoff lines can be varied depending on the light distribution pattern to be emitted.

According to the vehicle headlamp 10 having the above configuration, the first brightness gradient G1 in the upper-lower direction on the first cutoff line CL1, which is formed when the low beam light distribution pattern PL is emitted and which extends in the left-right direction, is relatively gentle. When the low beam light distribution pattern PL is emitted, the light-dark boundary in the upper-lower direction is relatively blurred, so that the long-distance visibility is secured, the sense of discomfort felt by the driver due to the light-dark boundary being too sharp is reduced, and the visibility is also excellent. On the other hand, the second brightness gradient G2 in the left-right direction on the second cutoff line CL2, which is formed when the high beam light distribution pattern (ADB light distribution pattern) PH is emitted and which extends in the upper-lower direction between the irradiation region and the non-irradiation region, is relatively steep. When the ADB light distribution pattern is emitted, the light-dark boundary in the left-right direction is relatively steep, so that even when the preceding vehicle 1B is present, glare is less likely to be given to the occupant of the preceding vehicle 1B.

When the light source 71 is implemented by the LED array as described above, by controlling the light emission state of each LED, it is possible to change the illumination state of each minute region in a target region to be irradiated with light in front of the lamp. Therefore, in the first embodiment, a light source that irradiates the light-blocked region is caused to emit light at the first emission brightness, and a light source that irradiates a region to be brightly irradiated is caused to emit light at a second emission brightness higher than the first emission brightness. In this example, the first emission brightness is zero, and the light source corresponding to the light-blocked region is turned off. The light source corresponding to the first cutoff line CL1 of the low beam light distribution pattern emits light at brightness intermediate between the first emission brightness and the second emission brightness. In this way, the third portion P23 is brighter than the region above the first cutoff line CL1 (light-blocked region), but is darker than the second portion P22 which is below the first cutoff line CL1.

According to the vehicle headlamp 10 having such a configuration, when the low beam light distribution pattern PL is formed, the first cutoff line CL1 is relatively blurred with light being emitted at a medium brightness, and thus the visibility is excellent. On the other hand, when the ADB light distribution pattern PH is formed, the light source corresponding to the second cutoff line CL2 does not emit light. When the ADB light distribution pattern PH is formed, image processing imposes a processing load on the vehicle control unit 50 and the lamp control unit 60. However, since only the first portion P21 is turned on at normal brightness, the processing load is reduced.

According to the vehicle headlamp 10 having the above-described configuration, the first optical unit 70 irradiates with light an irradiation region including a plurality of regions, any of which can change an illumination state independently of one another. Therefore, according to the vehicle headlamp 10, the low beam light distribution pattern PL and the high beam light distribution pattern (ADB light distribution pattern) PH can be precisely changed.

The vehicle headlamp 10 according to the above configuration includes the single first optical unit 70, so that the number of components can be reduced.

According to the vehicle headlamp 10 having the above configuration, the first optical unit 70 is implemented by the LED array. Therefore, the illumination state of the plurality of regions in the irradiation region of the first optical unit 70 can be accurately changed.

According to the vehicle headlamp 10 having the above configuration, the low beam light distribution pattern PL and the high beam light distribution pattern (ADB light distribution pattern) PH are formed to be divided into a plurality of irradiation regions. Therefore, according to the vehicle headlamp 10, the low beam light distribution pattern PL and the high beam light distribution pattern (ADB light distribution pattern) PH can be precisely changed.

(Second Embodiment)

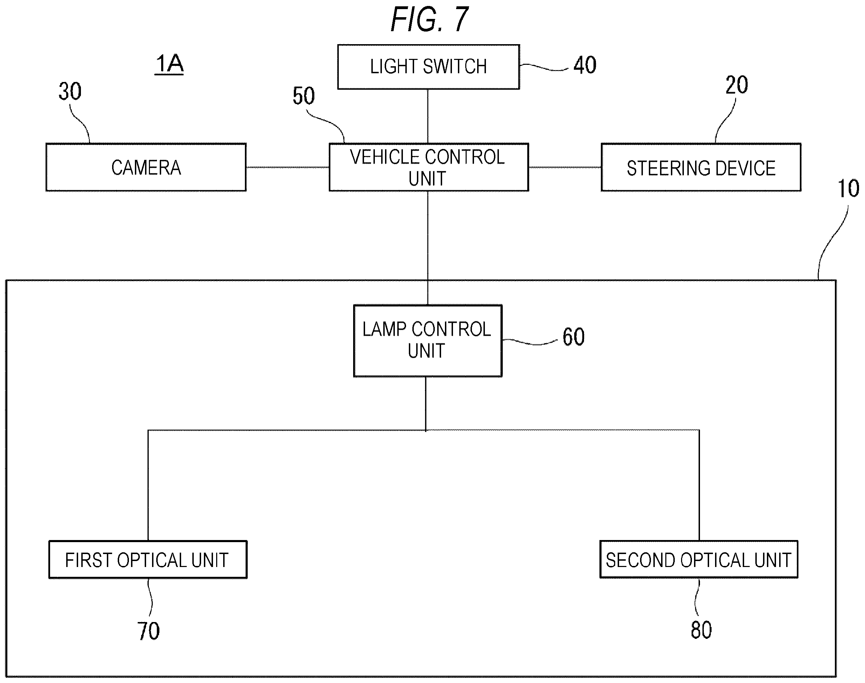

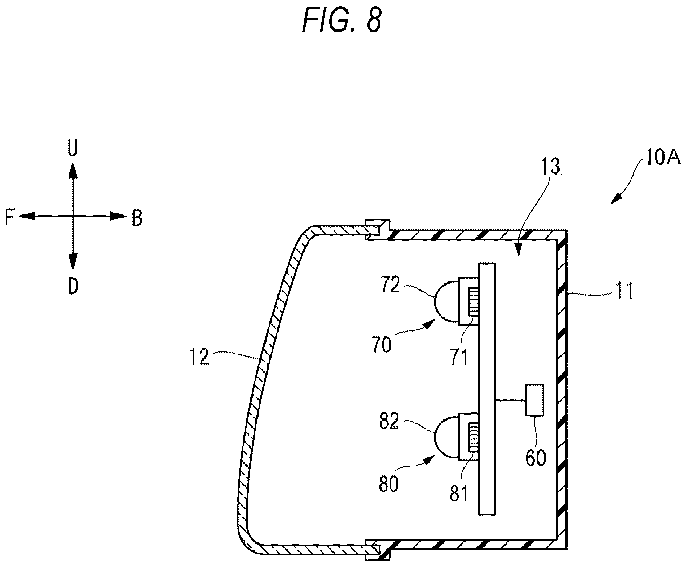

Next, a vehicle headlamp 10A according to a second embodiment will be described below with reference to FIGS. 7 and 8. In the configuration illustrated in FIG. 7, the same components as those illustrated in FIG. 2 are denoted by the same reference numerals, and the description thereof is omitted. In the configuration illustrated in FIG. 8, the same components as those illustrated in FIG. 3 are denoted by the same reference numerals, and the description thereof is omitted.

As illustrated in FIG. 7, the vehicle headlamp 10A according to the second embodiment includes a second optical unit 80 in addition to the lamp control unit 60 and the first optical unit 70. The lamp control unit 60 is configured to control the second optical unit 80 in addition to the first optical unit 70. As illustrated in FIG. 8, in the vehicle headlamp 10A, the lamp control unit 60, the first optical unit 70, and the second optical unit 80 are accommodated in the lamp chamber 13 formed by the lamp body 11 and the outer cover 12.

The second optical unit 80 is configured to emit light to a region including at least a region above the cutoff line and reduce light to a given region among the region. The second optical unit 80 is configured to emit, for example, an ADB light distribution pattern. The second optical unit 80 includes a light source 81 and a projection lens 82.

The light source 81 is configured to emit light toward the projection lens 82. The light source 81 includes, for example, a plurality of micro LED light emitting elements. The light emission states of the plurality of micro LED light emitting elements included in the light source 81 can be changed independently of each other. In the vehicle headlamp 10A, the lamp control unit 60 is configured to perform ON/OFF control and brightness adjustment for each of the micro LED light emitting elements included in the light source 81.

The projection lens 82 is configured to project the light emitted from the light source 81 onto a front region of the vehicle 1. The projection lens 82 is, for example, an aspherical lens in which a front surface is a convex surface and a rear surface is a flat surface. The projection lens 82 is formed of a transparent material such as a transparent resin such as acrylic.

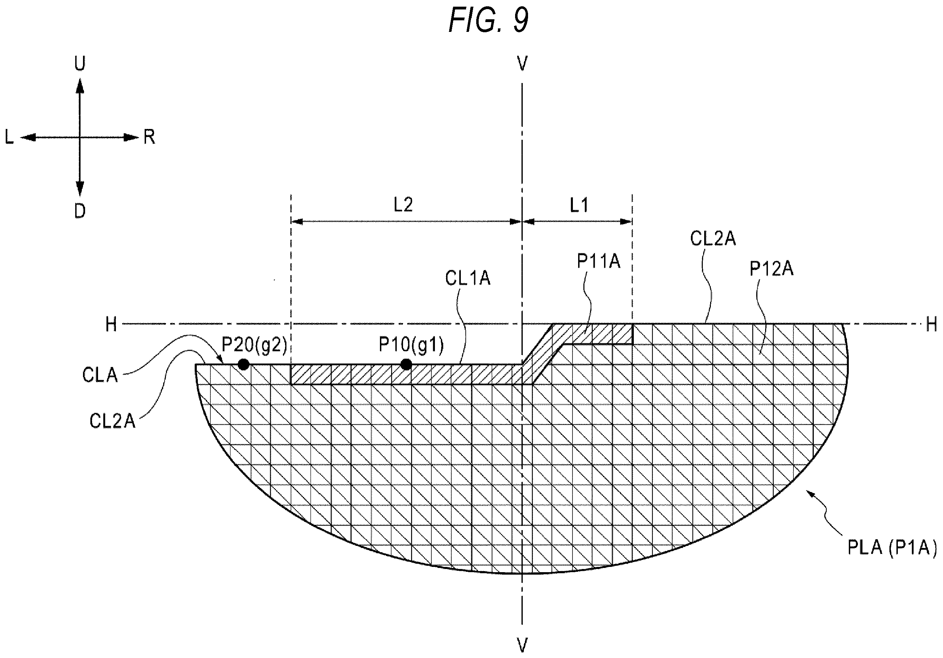

Next, a low beam light distribution pattern PLA emitted from the vehicle headlamp 10A during the low beam emission will be described with reference to FIG. 9.

FIG. 9 is a diagram illustrating the low beam light distribution pattern PLA during the low beam emission. In the second embodiment, a case where the vehicle 1 is traveling in the right lane will be described.

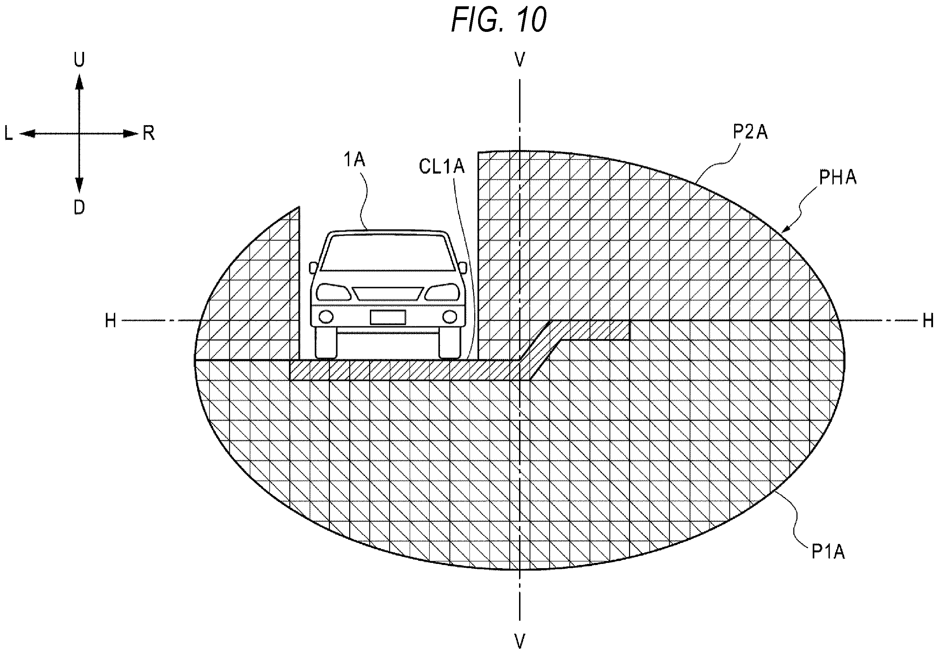

The low beam light distribution pattern PLA illustrated in FIG. 9 is projected on a virtual vertical screen at a predetermined position in front of the vehicle 1 (for example, a position 25 m in front of the vehicle 1). FIG. 9 illustrates a line V-V indicating a vertical direction (the upper-lower direction in FIG. 9) at the center of an irradiation range of the vehicle headlamp 10A, and a line H-H orthogonal to the line V-V and extending in a horizontal direction (the left-right direction in FIG. 9). In FIG. 9, hatching also is changed for each region having different brightness. That is, the brightness of the regions with the same hatching is the same, but the brightness of the regions with different hatching is different. FIG. 10 is illustrated in the same manner as FIG. 9.

As illustrated in FIG. 9, during the low beam emission, the vehicle headlamp 10A is configured to emit the low beam light distribution pattern PLA by turning on the first optical unit 70. Specifically, the first optical unit 70 is configured to emit a first light distribution pattern P1A having a cutoff line CLA and a region including at least a region below the cutoff line CLA. The low beam light distribution pattern PLA is formed by the first light distribution pattern P1A emitted by the first optical unit 70.

In this example, the low beam light distribution pattern PLA includes a first region P11A and a second region P12A. The first region P11A is a region located at an upper center of the low beam light distribution pattern PLA, including a first portion CL1A of the cutoff line CLA. The first portion CL1A is a portion located at the center of the cutoff line CLA passing through the line V-V. The first portion CL1A extends in the left-right direction across the line V-V in the virtual vertical screen.

In the first portion CL1A, a length on one side of the left-right direction is longer than a length on the other side of the left-right direction with the line V-V in between. In the present example, in the first portion CL1A, a length L2 on the oncoming vehicle lane side (left side) is longer than a length L1 on the subject vehicle lane side (right side) with the line V-V in between. For example, the first portion CL1A extends within a range of 5 degrees to the right from the front of the vehicle headlamp 10A and 20 degrees to the left from the front of the vehicle headlamp 10A in the horizontal direction.

The second region P12A is a region including a region located on an upper outer side of the low beam light distribution pattern PLA including a second portion CL2A of the cutoff line CLA, a region below the region, and a region below the first region P11A. The second portion CL2A is a portion located outside the first portion CL1A. The second portion CL2A extends outwardly to the left and right from both ends of the first portion CL1A, respectively.

The low beam light distribution pattern PLA is formed such that the first region P11A is brighter than the second region P12A. That is, the cutoff line CLA is formed such that the brightness of the first portion CL1A is higher than the brightness of the second portion CL2A.

The first portion CL1A constituting the cutoff line CLA is brighter than the second portion CL2A constituting the cutoff line CLA. Therefore, a brightness gradient at any position P10 in the first portion CL1A is greater than a brightness gradient at any position P20 in the second portion CL2A. Here, the brightness gradient at a predetermined position of the cutoff line is a ratio of the illuminance at a predetermined position of the cutoff line CLA to the illuminance at a position above the predetermined position by a vertical angle position of 0.1 degrees.

Specifically, a brightness gradient g1 at the position P10 is calculated using the following equation (3). E1(a) represents illuminance at the position P10. E1(a + 0.1) represents illuminance at a position above the position P10 by a vertical angular position of 0.1 degrees.

$$g1 = \log E1(a) - \log E1(a + 0.1) \quad \text{Equation (3)}$$

A brightness gradient g2 at the position P20 is calculated using the following equation (4). E2(a) represents illuminance at the position P20. E2(a + 0.1) represents illuminance at a position above the position P20 by a vertical angular position of 0.1 degrees.

$$g2 = \log E2(a) - \log E2(a + 0.1) \quad \text{Equation (4)}$$

The brightness gradient g1 at the position P10 is greater than the brightness gradient g2 at the position P20. The larger the brightness gradient, the larger the light-dark difference of the cutoff line CLA. Therefore, in the cutoff line CLA of the low beam light distribution pattern PLA, the first portion CL1A is visually recognized more clearly than the second portion CL2A, and the second portion CL2A is visually recognized more blurred than the first portion CL1A.

It is also preferable to form a low beam light distribution pattern with a sharp cutoff line where the light and dark suddenly change, thereby reducing glare to a driver of a preceding vehicle or an oncoming vehicle. However, on the other hand, there is a demand to form a low beam light distribution pattern having good visibility by blurring the cutoff line.

According to the vehicle headlamp 10A of the second embodiment, in the cutoff line CLA of the low beam light distribution pattern PLA, the first portion CL1A, which is the central portion, forms a sharp cutoff line, making it possible to reduce glare to a preceding vehicle or an oncoming vehicle. On the other hand, the second portion CL2A, which is the outer portion of the cutoff line CLA, forms a blurred cutoff line, making it possible to improve the visibility. Therefore, it is possible to provide the vehicle headlamp 10A that can form a light distribution pattern with good visibility while reducing the occurrence of glare.

In the second embodiment, the first portion CL1A of the cutoff line CLA is longer on the oncoming vehicle lane side than on the subject vehicle lane side. As a result, the cutoff line CLA on the oncoming vehicle lane side has longer sharp cutoff line, so that glare to the oncoming vehicle can be reduced.

Next, a high beam light distribution pattern PHA emitted from the vehicle headlamp 10A during the high beam emission will be described with reference to FIG. 10.

FIG. 10 is a diagram illustrating the high beam light distribution pattern PHA during the high beam emission. During the high beam emission, the vehicle headlamp 10A emits the high beam light distribution pattern PHA by turning on the first optical unit 70 and the second optical unit 80. Specifically, the first optical unit 70 is configured to emit the first light distribution pattern P1A. The second optical unit 80 is formed by a second light distribution pattern P2A having a region including at least a region above the cutoff line CLA. The high beam light distribution pattern PHA is formed by the first light distribution pattern P1A emitted by the first optical unit 70 and the second light distribution pattern P2A emitted by the second optical unit 80.

In the second embodiment, the high beam light distribution pattern PHA is an ADB light distribution pattern. Therefore, any region in the second light distribution pattern P2A can be reduced in light. Specifically, as illustrated in FIG. 10, when an oncoming vehicle 1A is present in front of the vehicle 1, the camera 30 outputs imaging data regarding the oncoming vehicle 1A to the vehicle control unit 50. The vehicle control unit 50 is configured to detect the surrounding environment information including the position information of the oncoming vehicle 1A from the imaging data received from the camera 30, and transmits the surrounding environment information to the lamp control unit 60. The lamp control unit 60 is configured to control the second optical unit 80, based on the surrounding environment information received from the vehicle control unit 50, so that light is not emitted toward the oncoming vehicle 1A. Therefore, in the example illustrated in FIG. 10, light to a surrounding region of the oncoming vehicle 1A is blocked.

The first portion CL1A having a large brightness gradient in the cutoff line CLA of the first light distribution pattern P1A is located within a range in which the light is blocked according to the presence of the oncoming vehicle 1A or a preceding vehicle during the high beam emission. Therefore, during the high beam emission, the surrounding region of the oncoming vehicle 1A or the preceding vehicle is blocked, and the first portion CL1A located below the oncoming vehicle 1A or the preceding vehicle in the cutoff line CLA of the first light distribution pattern P1A has a clear light-dark difference. Accordingly, when the ADB light distribution pattern is emitted, it is possible to reduce the occurrence of glare to an oncoming vehicle, an occupant of a preceding vehicle, or the like due to the cutoff line CLA of the first light distribution pattern P1A.

Although the embodiment of the present disclosure has been described above, it is needless to say that the technical scope of the present disclosure should not be construed as being limited by the description of the first and second embodiments. The first and second embodiments are merely an example, and it will be obvious to those skilled in the art that various embodiments can be changed within the scope of the disclosure described in the claims. The technical scope of the present disclosure is determined based on the scope of the disclosure described in the claims and the equivalent scope thereof.

In the first embodiment, the case where the vehicle 1 is traveling in the right lane has been described, but the present disclosure can also be applied to a case where the vehicle 1 is traveling in the left lane.

In the first embodiment, the case where the preceding vehicle 1B is in front of the vehicle 1 has been described, but the present disclosure can also be applied to a case where an oncoming vehicle is in front of the vehicle 1.

In the first embodiment, the vehicle headlamp 10 includes a single first optical unit 70. Alternatively, the vehicle headlamp 10 may include a plurality of optical units. For example, a vehicle headlamp may include: a first optical unit configured to emit light to a region including a cutoff line and at least a region below the cutoff line; a second optical unit configured to emit light to a region including at least a region above the cutoff line and reduce light to a given region among the region; and a third optical unit configured to emit light so as to overlap at least a part of the cutoff line. In this case, the vehicle headlamp turns on the first optical unit and the second optical unit during high beam emission, and turns on the first optical unit and the third optical unit during low beam emission. According to such a configuration, light is emitted by the third optical unit so as to overlap the cutoff line formed by the first optical unit during the low beam emission, so that the low beam light distribution pattern is formed which is blurred and has good visibility compared to the cutoff line formed by only the first optical unit. Further, during the high beam emission, a so-called ADB light distribution pattern is emitted, and glare is hardly given to an occupant of a preceding vehicle.

In the first embodiment, the first optical unit 70 may be implemented by, for example, at least one light source, a drive mirror, and an optical system including a lens or a mirror. The drive mirror may include, for example, a micro electro mechanical systems (MEMS) mirror, a digital mirror device (DMD), or a rotation blade mirror.

In the first embodiment, the first cutoff line CL1 formed when the low beam light distribution pattern PL is emitted is blurred more than the second cutoff line CL2 formed when the high beam light distribution pattern (ADB light distribution pattern) PH is emitted, and may be blurred more than the first cutoff line CL1 formed when the high beam light distribution pattern (ADB light distribution pattern) PH is emitted.

In the first embodiment, the second portion P12 of the low beam light distribution pattern PL has uniform brightness in the entire region. Alternatively, the second portion P12 may be brightest at the elbow point and become darker away from the elbow point.

In the first embodiments, the lamp control unit 60 is provided in the vehicle headlamp 10. Alternatively, the lamp control unit 60 may be provided in the vehicle 1 instead of the vehicle headlamp 10. In other words, the lamp control unit 60 may be integrated into the vehicle control unit 50.

In the first embodiment, the camera 30 is provided in the vehicle 1. Alternatively, the camera 30 may be provided in the vehicle headlamp 10 instead of the vehicle 1.

In the second embodiment, the first portion CL1A of the cutoff line CLA is formed longer on the oncoming vehicle lane side than on the subject vehicle lane side. Alternatively, the first portion CL1A may be formed longer on the subject vehicle lane side than on the oncoming vehicle lane side. As a result, the cutoff line CLA on the subject vehicle lane side has longer sharp cutoff line, so that glare to the preceding vehicle can be reduced.

In the second embodiment, the low beam light distribution pattern PLA includes two regions (the first region P11A and the second region P12A) having different brightness. However, as long as the first brightness gradient of the first portion CL1A located at the center of the cutoff line CLA is greater than the second brightness gradient of the second portion CL2A of the cutoff line CLA, the number of regions having different brightness, and the size and range of each region are not limited to the example shown in FIG. 9. For example, the low beam light distribution pattern PLA may be formed such that the brightness gradually decreases from a central portion toward the left-right direction and the downward direction in a region other than an upper portion including the cutoff line CLA.

In the second embodiment, the case where the vehicle 1 is traveling in the right lane has been described, but the present disclosure can also be applied to a case where the vehicle 1 is traveling in the left lane.

In the second embodiment, the vehicle headlamp 10A may include an optical unit capable of achieving the function of the first optical unit 70 and the function of the second optical unit 80. In this case, the number of components can be reduced.

In the second embodiment, the first optical unit 70 and the second optical unit 80 may be implemented by, for example, at least one light source, a drive mirror, and an optical system including a lens or a mirror. The drive mirror may include, for example, a micro electro mechanical systems (MEMS) mirror, a digital mirror device (DMD), or a rotation blade mirror. Alternatively, each of the first optical unit 70 and the second optical unit 80 may include at least one light source, a reflector, and a projection lens.

In the second embodiments, the lamp control unit 60 is provided in the vehicle headlamp 10A. Alternatively, the lamp control unit 60 may be provided in the vehicle 1 instead of the vehicle headlamp 10A. In other words, the lamp control unit 60 may be integrated into the vehicle control unit 50.

In the second embodiment, the camera 30 is provided in the vehicle 1. Alternatively, the camera 30 may be provided in the vehicle headlamp 10A instead of the vehicle 1.

The present application is based on the priority based on Japanese patent application No. 2023-021879 filed on February 15, 2023 and Japanese patent application No. 2023-018451 filed on February 9, 2023, and all the description contents described in the Japanese patent applications are incorporated.

**Claims**

1.  A vehicle headlamp for emitting an ADB light distribution pattern and a low beam light distribution pattern, wherein a first brightness gradient in an upper-lower direction on a first cutoff line extending in a left-right direction is different from a second brightness gradient in the left-right direction on a second cutoff line extending in the upper-lower direction between an irradiation region and a non-irradiation region, the first cutoff line being formed in a case where the low beam light distribution pattern is emitted, the second cutoff line being formed in a case where the ADB light distribution pattern is emitted.

2.  The vehicle headlamp according to claim 1, wherein the second brightness gradient is greater than the first brightness gradient.

3.  A vehicle headlamp comprising:

    a light source unit having a plurality of light sources each configured to change a light emission state independently,
    wherein the light source unit is configured to lower a first emission brightness of a light source corresponding to a light-reduced region to be lower than a second emission brightness of a light source corresponding to an irradiation region to form an ADB light distribution pattern and a low beam light distribution pattern, and
    wherein the light source unit is configured to cause a light source corresponding to a cutoff line of the low beam light distribution pattern to emit light at brightness intermediate between the first emission brightness and the second emission brightness.

4.  A vehicle headlamp for forming a low beam light distribution pattern having a cutoff line,

    wherein a first brightness gradient in a first portion located at a center of the cutoff line is larger than a second brightness gradient in a second portion located outside the first portion of the cutoff line, a brightness gradient being a ratio of illuminance at a predetermined position of the cutoff line of the low beam light distribution pattern to illuminance at a position above the predetermined position by a vertical angle position of 0.1 degrees, the low beam light distribution pattern being formed on a virtual vertical screen disposed at a predetermined distance from a vehicle,
    the first portion of the cutoff line extends in a left-right direction across a line V-V on the virtual vertical screen, and
    a length of the first portion on one side of the left-right direction with respect to the line V-V is longer than a length of the first portion on an other side of the left-right direction with respect to the line V-V.

5.  The vehicle headlamp according to claim 4, wherein, a length of the first portion of the cutoff line on an oncoming vehicle lane side with respect to the line V-V is longer than a length on a subject vehicle lane side with respect to the line V-V.

## FIG. 1

## FIG. 2

1

```
                    ┌──────────────────┐
                    │   LIGHT SWITCH   │──── 40
                    └──────────────────┘
                            │
30      50                  │                        20
┌──────────────┐    ┌──────────────────┐    ┌──────────────────┐
│    CAMERA    │────│  VEHICLE CONTROL │────│ STEERING DEVICE  │
│              │    │       UNIT       │    │                  │
└──────────────┘    └──────────────────┘    └──────────────────┘
                            │
        ┌───────────────────┼───────────────────────────┐
        │                   │                            │
        │           ┌──────────────────┐                 │
        │           │  LAMP CONTROL    │──── 60          │──── 10
        │           │      UNIT        │                 │
        │           └──────────────────┘                 │
        │                   │                            │
        │           ┌──────────────────┐                 │
        │           │ FIRST OPTICAL UNIT │──── 70        │
        │           └──────────────────┘                 │
        └────────────────────────────────────────────────┘
```

## FIG. 3

## FIG. 4

FIG. 5

FIG. 6

## FIG. 7

EP 4 663 478 A1

FIG. 8

## FIG. 9

EP 4 663 478 A1

*FIG. 10*

## INTERNATIONAL SEARCH REPORT

| International application No. |
|---|
| **PCT/JP2024/004107** |

### A. CLASSIFICATION OF SUBJECT MATTER

***B60Q 1/076***(2006.01)i; ***B60Q 1/04***(2006.01)i; ***B60Q 1/14***(2006.01)i; ***B60Q 1/16***(2006.01)i; ***F21S 41/143***(2018.01)i;
***F21S 41/153***(2018.01)i; ***F21S 41/663***(2018.01)i; *F21W 102/145*(2018.01)n; *F21W 102/155*(2018.01)n;
*F21Y 105/10*(2016.01)n; *F21Y 105/14*(2016.01)n; *F21Y 115/10*(2016.01)n
FI:    B60Q1/076; B60Q1/04 Z; B60Q1/14 B; F21S41/143; F21S41/153; F21S41/663; B60Q1/04 E; B60Q1/14 A; B60Q1/16;
F21W102:155; F21Y105:14; F21Y115:10; F21W102:145; F21Y105:10

According to International Patent Classification (IPC) or to both national classification and IPC

### B. FIELDS SEARCHED

Minimum documentation searched (classification system followed by classification symbols)

B60Q1/076; B60Q1/04; B60Q1/14; B60Q1/16; F21S41/143; F21S41/153; F21S41/663; F21W102/145; F21W102/155;
F21Y105/10; F21Y105/14; F21Y115/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2018-034758 A (KOITO MANUFACTURING CO., LTD.) 08 March 2018 (2018-03-08) paragraphs [0029], [0050]-[0053], fig. 6 | 1-5 |

☐ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **25 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/004107**

**Box No. III    Observations where unity of invention is lacking (Continuation of item 3 of first sheet)**

This International Searching Authority found multiple inventions in this international application, as follows:

Document 1: JP 2018-034758 A (KOITO MANUFACTURING CO., LTD.) 08 March 2018 (2018-03-08) paragraphs [0029], [0050]-[0053], fig. 6 (Family: none)

Claims are classified into three inventions below.

(Invention 1) Claims 1-2
Claims 1-2 have the special technical feature of a "vehicle headlight that is capable of emitting an ADB light distribution pattern and a low beam light distribution pattern, wherein a vertical first luminance gradient on a first cutoff line extending horizontally and formed when the low beam light distribution pattern is emitted is different from a horizontal second luminance gradient on a second cutoff line extending vertically between an irradiation area and a non-irradiation area and formed when the ADB light distribution pattern is emitted," and are thus classified as invention 1.

(Invention 2) Claim 3
Claim 3 shares, with claim 1 classified as invention 1, the common technical feature of a "vehicle headlight that is capable of emitting an ADB light distribution pattern and a low beam light distribution pattern, the vehicle headlight forming a cutoff line." However, said technical feature does not make a contribution over the prior art in light of the disclosure of document 1, and thus cannot be said to be a special technical feature. There are no other same or corresponding special technical features between these inventions.
Claim 3 is not dependent on claim 1. Claim 3 is not substantially identical to or similarly closely related to any of the claims classified as invention 1.
Therefore, claim 3 cannot be classified as invention 1.
Claim 3 has the special technical feature of a "vehicle headlight comprising a light source unit that includes a plurality of light sources whose lighting states vary independently, wherein the light source unit is configured to form an ADB light distribution pattern and a low beam light distribution pattern by decreasing a first lighting luminance of a light source corresponding to an extinction area than a second lighting luminance of a light source corresponding to an irradiation area, and the light source unit causes a light source corresponding to a cutoff line of the low beam light distribution pattern to emit light with luminance between the first lighting luminance and the second lighting luminance," and is classified as invention 2.

(Invention 3) Claims 4-5
Claims 4-5 share, with claim 1 classified as invention 1 and claim 3 classified as invention 2, the common technical feature of a "vehicle headlight that is capable of emitting a low beam light distribution pattern, the vehicle headlight forming a cutoff line." However, said technical feature does not make a contribution over the prior art in light of the disclosure of document 1, and thus cannot be said to be a special technical feature. There are no other same or corresponding special technical features between these inventions.
Claims 4-5 are not dependent on any of claims 1 and 3. Claims 4-5 are not substantially identical to or similarly closely related to any of the claims classified as invention 1 or invention 2.
Therefore, claims 4-5 cannot be classified as either invention 1 or invention 2.
Claims 4-5 have the special technical feature of a "vehicle head lamp that forms a low beam light distribution pattern having a cutoff line, wherein for a luminance gradient which is a ratio between illuminance at a predetermined position of the cutoff line of the low beam light distribution pattern formed on a virtual vertical screen disposed at a position located at a predetermined distance from a vehicle and a illuminance at a position where a vertical angle position from the predetermined position is directed upward by 0.1 degree, a first luminance gradient at a first portion located at the center of the cutoff line is larger than a second luminance gradient at a second portion located outside with respect to the first portion of the cutoff line, the first portion of the cutoff line extends in a left and right direction with V-V line on the virtual vertical screen interposed therebetween, and in the first portion, a length of one side in the left and right direction with the V-V line interposed therebetween is longer than a length of the other side in the left and right direction," and are thus classified as invention 3.

Form PCT/ISA/210 (continuation of first sheet) (July 2022)

**INTERNATIONAL SEARCH REPORT**

International application No.

**PCT/JP2024/004107**

| Box No. III | Observations where unity of invention is lacking (Continuation of item 3 of first sheet) |
|---|---|

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/004107**

| Patent document cited in search report | Publication date (day/month/year) | Patent family member(s) | Publication date (day/month/year) |
|---|---|---|---|
| JP 2018-034758 A | 08 March 2018 | (Family: none) | |

Form PCT/ISA/210 (patent family annex) (July 2022)

24

**EP 4 663 478 A1**

**Patent documents cited in the description**

- WO 2018186187 A1
- JP 2008262755 A
- JP 2023021879 A
- JP 2023018451 A